# EUROPEAN PATENT APPLICATION

(11) **EP 1 630 695 A2**
(43) Date of publication of application: **01.03.2006**
(21) Application number: 05024921.8
(22) Date of filing: 03.09.2003
(51) Int. Cl.: G06F 17/30

(54) **Dynamic access of data**

(30) Priority: 03.09.2002 US 408130 P; 16.10.2002 US 419292 P; 27.11.2002 US 429688 P; 12.02.2003 US 365672; 13.02.2003 US 367102; 13.02.2003 US 367103
(62) Divisional of application: 03794020.2
(71) Applicant: SAP AG, 69190 Walldorf (DE)
(72) Inventor: Gockel, Holger, 69190 Walldorf (DE); Kalthoff, Wolfgang, 76669 Bad Schonborn (DE); Vogt, Thomas, 67354 Romerberg (DE)
(74) Representative: Müller-Boré & Partner Patentanwälte

(57) **Abstract**

Modification of a set of data associated with an object, the set of data stored in a database maintained by a server. A client sends a request to the server to modify the set of data associated with the object. It is verified that the requested modifications conform to rules defined by each of or a subset of the other clients.

## Description

### BACKGROUND

The present invention relates to dynamic access of master data.

In a heterogeneous information technology environment, different computer application systems are used within an organization or across different organizations. For example, a system may be used to manage information related to customers of a company, another system may be used to manage information related to products. Each system may have its own user interface, data storage, and processes for processing data. Each system may be designed to optimize its performance to handle particular tasks. There may be correlation between the data maintained by the two systems. For example, some products may be requested by certain customers, have to be customized to meet certain specifications, and need to be delivered to particular addresses of the customers.

To allow systems to share data, one system may be installed as a master data server for maintaining a master database that stores all customer data in the form of customer objects and the other system may be installed as a master data server for a master database that stores all product data in the form of product objects. Each customer object has attributes that describe various aspects of the customer. Some attributes of the customer are local, and some attributes are global The local attributes are stored only in their respective databases, while global attributes are replicated asynchronously to different databases periodically or at certain trigger points. Because global attributes are replicated, the systems may access the customer data and product data that they require by accessing respective databases using local application programming interfaces. Because each system maintains its own database, each system may be upgraded or maintained independently.

### SUMMARY

In general, in one aspect, the invention is directed towards a method of dynamically accessing data. The method includes sending a request from a client to a server to access data stored in a database maintained by the server, retrieving a first set of data from the database, mapping the first set of data to a second set of data based on a set of mapping rules that is defined by the client, and receiving at the client the second set of data.

Implementations of the invention may include one or more of the following features. The data stored in the database includes attribute values of objects. The objects include products. The objects include business partners. Mapping of the first set of data to the second set of data includes removing attribute data in the first set of data that is not relevant to the client. The set of mapping rules is modified from time to time by the client independent of the server.

In general, in another aspect, the invention is directed towards a method of maintaining data. The method includes receiving at a server an identifier and data associated with an object that is identified by the identifier, the server configured to maintain a database that is accessible to clients, for each client, verifying that the identifier and the data conforms to a set of rules defined by the client, and entering the identifier and the data into the database.

Implementations of the invention may include one or more of the following features. The data includes attribute values associated with the object. Verifying that the identifier and the data conforms to the set of rules includes verifying that the data conforms with a subset of rules defined by the client relating to attributes of objects. The subset of rules includes rules for defining acceptable formats of attribute values. Verifying that the identifier and data conforms to a set of rules includes verifying that the identifier conforms with a subset of rules defined by the client relating to identification of objects. The set of rules includes rules for defining acceptable formats of an identifier. The method further includes linking the data to the identifier. The method further includes sending a request from a client to the server requesting data linked to the identifier, and converting the data in the database linked to the identifier into a format acceptable by the client. The method further includes sending a request from the server to a second server, the request requesting verification of the identifier and the data, identifying which clients can assess the database, and routing the request from the second server to clients identified to be able to access the database. The object includes a product. The object includes a business partner. The server communicates with the clients using messages written in an extensible markup language. The method further includes for each client, sending a request to the client to request verification of whether the identifier and the data conforms to the set of rules defined by the client, and if a particular client does not respond, placing the client on an exception list to indicate that the identifier and the data have not been verified to conform with the set of rules defined by the particular client. Another attempt to verify whether the identifier and the data conforms to the set of rules defined by the particular client is conducted after a predefined period of time or when the particular client attempts to access data in the database.

In general, in another aspect, the invention is directed towards a method of maintaining data. The method includes sending a request from a client to a server to request modification of a set of data associated with an object, the set of data stored in a database maintained by the server, receiving a message that the server has locked the set of data so that only the client can modify the set of data, sending a set of modified data to the server for storing the modified data in the database, receiving a message that the modified data was stored in the database, with the server determining what other clients may access the modified data for each of the other clients, verifying that the modified data conform with a set of rules defined by the client.

Implementations of the invention may include one or more of the following features. The set of data includes attribute values associated with the object. The set of rules defined by the client includes rules for defining acceptable formats of attribute values. The server determines what other clients may access the modified data by comparing the attributes with checklists published by clients, each checklist indicating attributes that are accessible to a client. The object includes a product. The object includes a business partner. The server communicates with the clients using messages that comprise code written in an extensible markup language.

In general, in another aspect, the invention is directed towards a method that includes providing a client computer having a module to allow switching between a first mode of storing data in a local database and a second mode of storing data in a remote database maintained by a server computer, and providing an interface for dynamically mapping data stored in the remote database to data having a format defined by the client computer.

Implementations of the invention may include one or more of the following features. The method further includes providing a second client computer also having a module to allow switching between a first mode of storing data in a local database and a second mode of storing data in the remote database maintained by the server computer, the interface also dynamically mapping data stored in the remote database to data having a second format defined by the second client computer, the second format being modified by the second client independent of the first client.

In general, in another aspect, the invention is directed towards a system that includes a data server to maintain a database that stores data associated with an object that is identified by an identifier, the object having attributes that describe aspects of the object, the data including attribute values associated with the attributes, clients that access the data stored in the database, each client defining a set of rules for identifiers and attributes, and an integration server that communicates with the clients and the data server, the integration server in response to a request for data from a client maps the data in the data server to data that has a format conforming to the rules defined by the client.

Implementations of the invention may include the following feature. The integration server communicates with the clients and the data server using messages that include code written in extensible markup language.

In general, in another aspect, the invention is directed towards a computer program product, tangibly stored on a machine-readable medium, for dynamic access of master data, including instructions operable to cause a programmable processor to receive a request from a client to access data stored in a database maintained by a server, retrieve a first set of data from the database, map the first set of data to a second set of data based on a set of mapping rules that is defined by the client, and send the second set of data to the client.

Implementations of the invention may include one or more of the following feature. The data stored in the database includes attribute values of objects. The objects include products. The objects include business partners. The instructions are operable to cause the programmable processor to remove attribute data in the first set of data that is not relevant to the client. The set of mapping rules is modified from time to time by the client independent of the server.

In general, in another aspect, the invention is directed towards a computer program product, tangibly stored on a machine-readable medium, for dynamic access of master data stored in a database that is accessible to clients, including instructions operable to cause a programmable processor to receive an identifier and data associated with an object that is identified by the identifier, for each client, verify that the identifier and the data conforms to a set of rules defined by the client, and enter the identifier and the data into the database.

Implementations of the invention may include one or more of the following feature. The data includes attribute values associated with the object. The instructions operable to cause the programmable processor to verify that the data conforms with a subset of rules defined by the client relating to attributes of objects. The subset of rules includes rules for defining acceptable formats of attribute values. The instructions are operable to cause the programmable processor to verify that the identifier conforms with a subset of rules defined by the client relating to identification of obj ects. The set of rules includes rules for defining acceptable formats of an identifier. The instructions are operable to cause the programmable processor to link the data to the identifier. The instructions are operable to cause the programmable processor to send a request from a client to the server requesting data linked to the identifier, and convert the data in the database linked to the identifier into a format acceptable by the client. The object includes a product. The object includes a business partner. The server communicates with the clients using messages written in an extensible markup language. The instructions are operable to cause the programmable processor to, for each client, send a request to the client to request verification of whether the identifier and the data conforms to the set of rules defined by the client, and if a particular client does not respond, place the client on an exception list to indicate that the identifier and the data have not been verified to conform with the set of rules defined by the particular client. The instructions are operable to cause the programmable processor to initiate another attempt to verify whether the identifier and the data conforms to the set of rules defined by the particular client after a predefined period of time or when the particular client attempts to access data in the database.

In general, in another aspect, the invention is directed towards a computer program product, tangibly stored on a machine-readable medium, for dynamic access of master data, including instructions operable to cause a computer system having clients and a server to send a request from a first client to the server for modification of a set of data associated with an object, the set of data stored in a database maintained by the server, receive a message that the server has locked the set of data so that only the client can modify the set of data, send a modified set of data to the server for storing the data in the database, and receive a message that the set of modified data was stored in the database, where the server determines what other clients may access the set of modified data for each of the other clients, and verifies that the set of modified data conform with a set of rules defined by the client.

Implementations of the invention may include one or more of the following feature. The set of data includes attribute values associated with the object. The set of rules defined by the client includes rules for defining acceptable formats of attribute values. The instructions are operable to cause the computer system to compare the attribute values with checklists published by clients, each checklist indicating attributes that are accessible to a client. The object includes a product. The object includes a business partner. The instructions are operable to cause the server to communicate with the clients using messages that comprise code written in an extensible markup language.

The details of one or more embodiments of the invention are set forth in the accompanying drawings and the description below. Other features, objects, and advantages of the invention will be apparent from the description and drawings, and from the claims.

### DESCRIPTION OF DRAWINGS

FIG 1 shows a heterogeneous system.
FIG 2 shows details of a client and a server.
FIGs. 3-5 show processes for verifying consistency of master data.
FIG 6 is a diagram showing data entry.
FIG 7 shows an architecture for a hybrid software.
FIG 8 shows a hybrid architecture.
FIG 9 shows an application accessing master data using a proxy.
FIG 10 shows a computer system.

### DETAILED DESCRIPTION

### Systems with a single master database

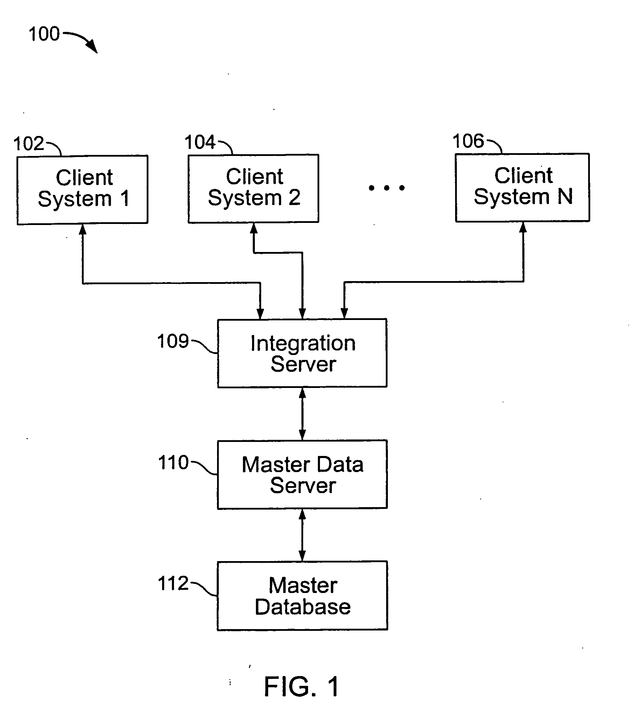

Referring to FIG 1, a heterogeneous system 100 includes a master data server (MDS) 110, an integration server 109, and client systems 102-106. Master data server 110 maintains a single master database 112, and client systems 102-106 synchronously and dynamically access master database 112 through integration server 109 and master data server 110. Client systems 102-106 agree on data stored in database 112 through a consistency check process when the data is first stored into master database 112. When data is updated by master data server 110 or one of client systems 102-106, the changes are visible to all client systems 102-106. An advantage of using a single master database 112 is that administration overhead is reduced, and problems with synchronization of different databases are eliminated.

The terms "synchronous" and "dynamic" mean that processes running in client systems can access information from master database 112 whenever the processes need the information without having to store data locally at the client side. The processes may be batch processes running in the background, or processes adapted to allow users to access, view, and maintain master data. Different processes may require different data formats, and data transferred between the client systems and master data server are dynamically mapped from one format to another, depending on how the systems are configured. Each client system may be configured independently of the other systems, and each system may view and process the data in master database 112 differently. Integration server 109 dynamically maps the data so as to conform to data formats defined by each client system and the master data server.

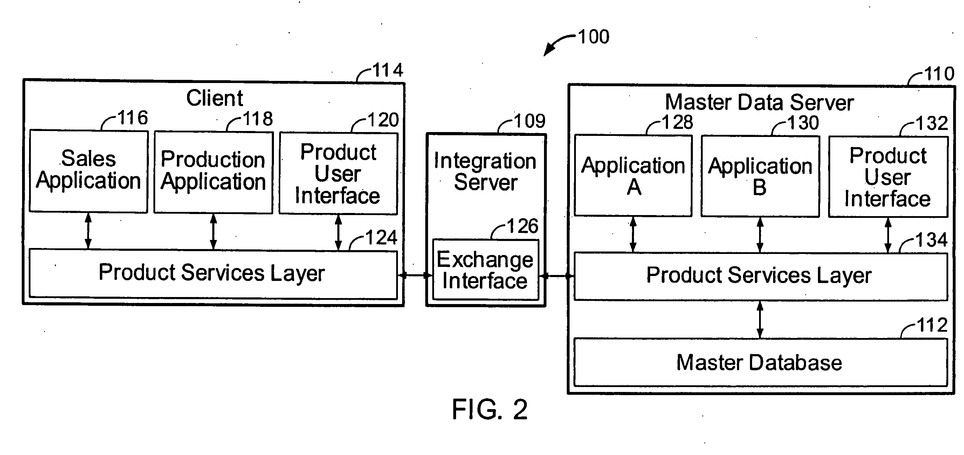

Referring to FIG. 2, a client 114 is used to represent any of client systems 102-106. Different application programs, for example, a sales application 116 and a production application 118 that access data related to products, may be running on client 114. The application programs 116 and 118 accesses functionality provided by a product services layer 124. A product user interface 120 interacts with product services layer 124 and provides a graphical representation of the data for a user. Product services layer 124 is native to client 114, and provides functions to process product data according to product models associated with client 114. For example, client 114 may have applications that are used to manage customer relationships. These applications may need data related to products that are transferred to and from the customers. Product data used by applications running on client 114 may contain sales data but not financial data. Client 114 does not store any data related to products. Instead, all requests for accessing such data are routed to master data server 110 through an exchange interface 126 in integration server 109.

The main function of master data server 110 is to maintain master data stored in master database 112. Different applications programs, such as applications 128 and 130 that access master data, may be running on master data server 110. Applications 128 and 130 access functionality provided by a product services layer 134. A product user interface 132 interacts with product services layer 134 and provides a graphical representation of the data for a user. Product services layer 134 is native to master data server 110, and provides functions for processing product data according to product models associated with master data server 110. Product services layer 134 has access to master database 112. When applications running on client 114 need to access master data stored in master database 112, the requests are routed through exchange interface 126 to product services layer 134. Exchange interface 126 can connect to product services layers 124 and 134 using peer-to-peer connections.

The product models associated with client 114 may be different from the product model associated with master data server 110. Thus, a semantic mapping is required when product services layer 124 accesses master database 112 through product services layer 134.

Product services layer 124 provides a consistent application programming interface that can be used by the applications of client 114. This makes it easier to maintain and upgrade sales application 116 and production application 118. The product services layer is native to the client, so different clients may have different product services layers. Each product services layer of a client system and its associated applications can be modified or upgraded independently of the product services layer of other client systems.

### Maintaining master data

When master data is produced or modified, the data should be consistent with the business processes running on the clients. For a process to work correctly, the process needs to rely on the consistency of the data that it uses. When master data is produced or updated, it is not known which clients will use the data. Therefore, all clients that may be relevant to the data checks the data for consistency before the data is used.

As the user maintains (e.g., add, modify, or delete) master data, the user wants to ensure that changes are consistent with the processes running on the clients. The user needs an immediate response from the system informing of inconsistencies, helping make the data consistent.

Consistency rules from the clients may contradict each other. When contradiction occurs, it is not possible to maintain a master data object because no data option exists that satisfies all clients. The clients then has to be harmonized by the user maintaining the data before the master data object can be produced.

Consistency can be checked either when writing or when reading data. An advantage of checking consistency when reading data is that each client ensures the consistency of the data used by its processes when reading the data. A disadvantage is that read operations are performed more often than write operations, thus checking consistency when reading data is less efficient than when writing data. Another disadvantage is that when an inconsistency is found during a read operation, it may not be possible to resolve the inconsistency. It may be necessary to suspend a process that accessed the inconsistent data, and to find the person who entered the data to determine whether correction is possible and what the correct data should be. By comparison, an advantage of checking consistency when writing data is that the user can be asked to correct the data before it is actually saved and written into the master database.

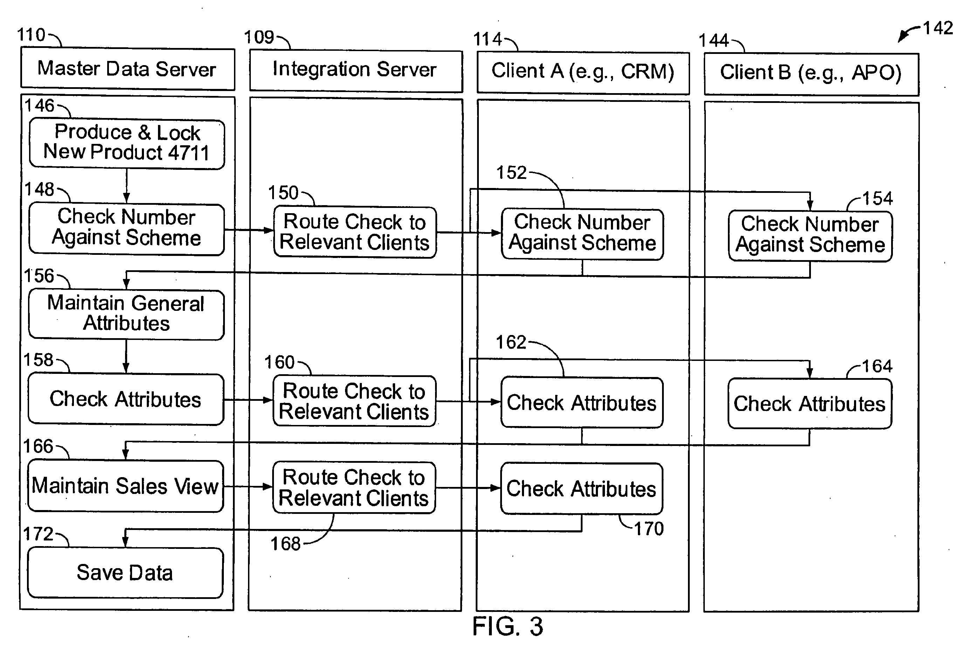

Referring to FIG. 3, a data entry process 142 is performed when new data is entered into master database 112 by a user through master data server 110. In this example, maintenance of master data is performed on the master data server 110. A - client A 114 and a client B 144 are connected to integration server 109. A user selects a user interface (e.g., a screen) to produce and lock 146 a new entry for a new product. As an example, the user selects a number "4711" to identify the new product. Before the new entry is saved into master database 112, the identifier "4711" is "locked" so that it cannot be used by another user to identify another product. The locking procedure ensures that only one person can create master data related to the identifier "4711".

To ensure that all applications will be able to access the data entered into master database 112 by its identifier, the identifier (i.e., the number "4711") is checked 148 against a scheme that defines the acceptable formats of identifiers. Master data server 110, client A 114, and client B 144 may each have its own scheme that is different from other schemes. For example, master data server 110 may use a scheme that requires the identifier to have less than 10 digits. After the identifier is verified to conform to the scheme required by master data sever 110, a request is sent from master data server 110 to integration server 109 to check the identifier against schemes generated by various clients.

Integration server 109 has information on which client can have access to the new data. For example, client A 114 and client B 144 may both have access to data related to "products." Integration server 109 routes 150 requests for checking the identifier against schemes to relevant clients, which, in this case, are client A 114 and client B 144. When client A 114 receives the request for verifying the identifier, client A 114 checks 152 the identifier against its own scheme. If the identifier does not match the scheme, an error message is sent to master data sever 110, indicating that the user has to select another identifier. Likewise, client B 144 checks 154 the identifier against its own scheme, and sends an error message to master data server 110 if the identifier does not match the scheme The checks 148, 152, and 154 ensure that master data server 110, client A 114, and client B 144 can all access the new data by using identifiers that are valid for each of server 110, client A 114, and client B 144.

If the format of the identifier has been verified, the user continues to maintain general attributes associated with the product 4711. An attribute can be, for example, a short text description of the product, a base unit of measure, a sales unit of measure, a price of the product, a quantity of the product, planning parameters for a product, or a vendor of the product. General attributes are attributes that are relevant to more than one client.

The user enters attribute values for each attribute, then checks 158 whether the attribute values satisfy consistency rules set for those attributes. For example, a consistency rule may require that, if a new unit of measure is added, it needs to have a conversion factor to existing units of measure. As another example, a consistency rule may require that if a number is used to represent the price of a product, a currency must be specified as well.

Master data server 110 sends a request to integration server 109 to request verification of the attribute values. Integration server 109 routes 160 the request to relevant clients. Upon receiving the request, client A 114 checks 162 the attribute values against consistency rules defined by client A 114, and sends a message to master data server 110 if a violation of the rules occurred. For example, client A 114 may define a consistency rule that requires a base unit of measure to accompany a sales unit of measure (for example, if a salesperson sells the product in units of boxes, he needs this unit of measure ― box, and additional information as to how many products are in a box). Another consistency rule may require that the price be specified in Euros.

Upon receiving the request for verification of attributes, client B 144 checks 164 the attribute values against rules defined by client 144. For example, a consistency rule may require that a production time can only be changed if there is no open planning run (this may be required because, for example, the planning run relies on a constant production time).

After client A 114 and client B 144 verify that the attributes conform to the rules defined by those clients, a user selects an interface (e.g., a screen) to maintain 166 data that is related to, for example, sales. Attributes related to sales may be relevant only to client A 114 and not client B 144. Integration server 109 keeps track of what types of attributes are relevant to which client or clients. After the user adds or modifies data relevant to sales, master data server 110 sends a request to integration server 109 to verify that the data conforms to the consistency rules of the clients. Integration server 109 routes 168 the request to a relevant client, which, in this example, is client A 114. Upon receiving the request, client A 114 checks the data related to sales with consistency rules related to sales data that are defined by client A 114. If the data is consistent with the consistency rules, master data server 110 saves 172 the new data into master database 112.

Master data can also be maintained by a user of a client using an interface to implement a maintenance dialog. The interface may be designed so that only the data relevant to the client is displayed and maintained.

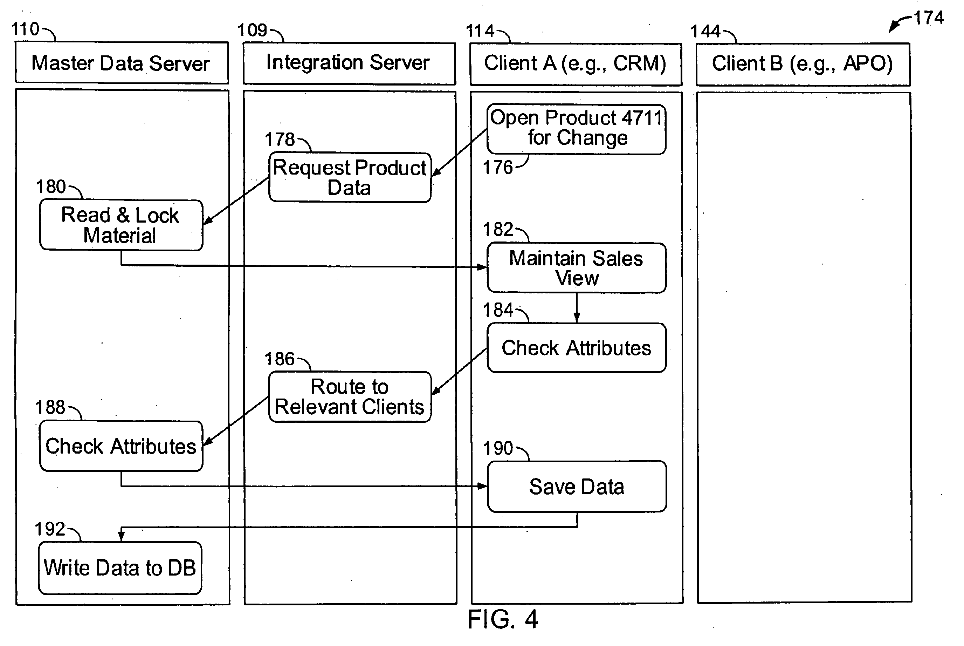

Referring to FIG. 4, data maintenance process 174 is performed when a client updates data in the master database 112. In this example, client A 114 wishes to update data related to product 4711. Client A 114 "opens" 176 product 4711, which may mean showing a graphical user interface that allows the user to enter the identifier "product 4711" to identify what data needs to be modified.

Client A 114 sends a request to integration server 109, which requests 178 the data from master data server 110. Upon receiving the request, master data server 110 reads and locks 180 data related to product 4711. Locking is done by the master data server 110, regardless of which client changed the data. Master data server 110 needs to know which client is locking the data so that this information can be communicated to another client attempting to access the data. The data is sent to integration server 109, which maps the data into data that has the format of client A 114. As an example, client A 114 maintains data relevant to sales. Client 114 uses the graphical user interface to display a view that shows only data relevant to sales. The user at client A 114 proceeds to maintain 182 (e.g., revises or deletes) data relevant to sales. The updated data is checked for consistency against rules defined by other clients and the master data server 110.

Client A 114 sends a request to server 109 to initiate the verification process. Integration server 109 routes 186 the request to relevant clients. In this example, because sales data is not relevant to client B 144, integration server 109 does not send the request to client B 144. Integration server 109 sends the request to master data server 110, which in response to the request, checks 188 the attributes against the consistency rules defined by master data server 110 for consistency. After master data server 110 and other clients send messages indicating that the updated data is consistent with the consistency rules, client A 114 saves 190 the data, and sends a message to master data server 110 requesting that the master data server save the updated data into master database 112.

Master data server 110 maintains data required by many applications or processes running on different clients. A client (or a user using the client) maintaining data associated with an object may not be qualified or authorized to modify all of the data, and may maintain only the data for his process (e.g., sales). Integration server 109 is configured so that it is possible for a user to access only a view having data relevant to his process, and thus only have to deal with consistency requirements for this view. The data (and the object associated with the data) that has been maintained can be used for this view (i.e., can be used for processes associated with this view). The data may not be usable in views not yet created (e.g., future planning).

The clients that need to check for consistency are determined by integration server 109. Integration server 109 routes the check request to the clients at runtime and returns the results of each client, either an "okay message" or a collection of messages describing errors in consistency. The errors are displayed to allows the user to modify the data to ensure consistency.

During a consistency check process, if a client does not respond, the client is placed on an exception list, and the check process continues with the remaining clients. This ensures that maintenance of master data is not interrupted due to some failure of a client.

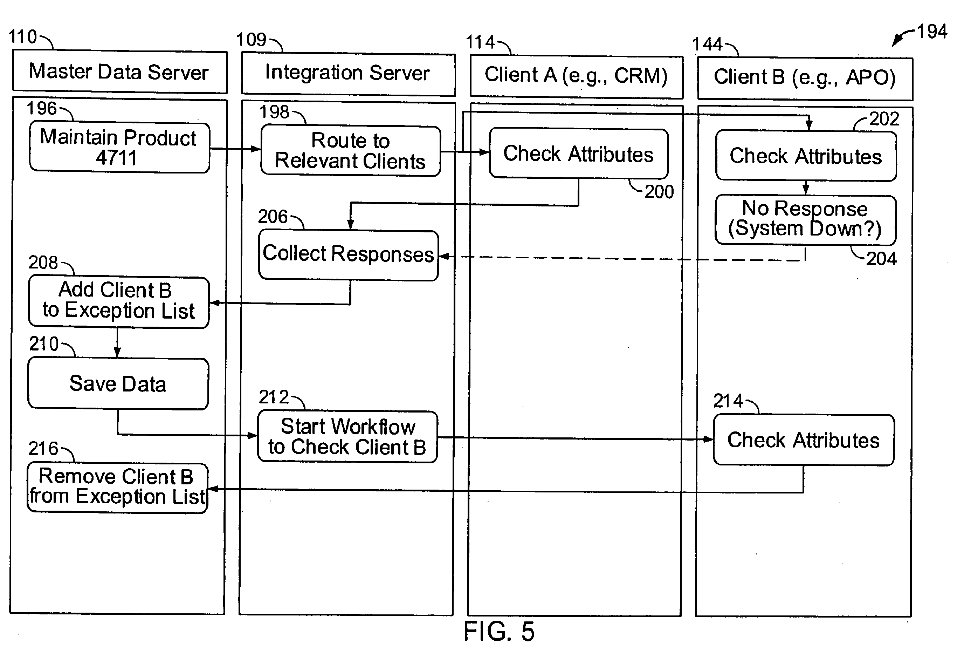

Referring to FIG. 5, a data maintenance process 194 occurs when a client does not respond. Master data sever 110 maintains 196 data associated with product 4711, and sends a request to integration server 109 to check for consistency. Integration server 109 routes 198 the request to relevant clients. Upon receiving the request, client A 114 checks 200 the attributes. Client B 144, upon receipt of the request, is supposed to check 202 the attributes as well. However, for some reason (e.g., system down), client B 144 may not respond 204. Integration server 109 collects 206 all responses from the clients, and discovers that no response has been received from client B 144. Integration server 109 sends the responses collected from the clients to master data server 110.

Master data server 110 adds 208 client B 144 to an exception list, indicating that client B 144 has not confirmed whether the updated data is consistent with the consistency rules required by client B 144. Master data server 110 saves 210 the updated data into master database 112, and starts 212 a workflow to check client B 144. The workflow may check client B 144 manually or automatically after a certain time delay, or to check client B 144 upon a trigger event, such as when client B 144 sends a read request, signaling that communication with the client is possible. If integration server 109 communicates successfully with client B 144, client B 144 checks 214 the attributes to verify consistency. Upon receiving confirmation from client B 144 that there is no conflict, master data server 110 removes 216 client B 144 from the exception list.

Using the approach above, the master data maintenance process is not stalled when a client is not available in the network. Inconsistent data is not passed on to a client. The exception list is used to determine which clients should be temporarily denied access to the object until consistency checks have been completed.

### Consistency and organizational units

An attribute of a data object may be "organizational unit." Data produced for an organizational unit may be relevant only to certain clients. For example, when planning data for a first manufacturing plant is produced, the data may only be needed by an application (e.g., an advanced planner and optimizer application) conducting planning for the first manufacturing plant, and may be irrelevant to a planning application conducting planning for a second manufacturing plant.

Integration server 109 routes data only to clients for which the data is relevant. A consistency check is performed by those clients. If a message processed by integration server 109 contains references to two organizations, then the message may be split into two sub-messages, and each sub-message is used to conduct a consistency check. This approach can also be used to route data to different clients according to attributes other than organizational units.

Occasionally, data may not be correctly routed. Thus, a client is designed to react to irrelevant data in a way that does not disrupt normal operation of the client. For example, if the planning application for the second manufacturing plant receives data for the first manufacturing plant, the planning application needs to ignore this data instead of returning an error to the consistency check process.

### Adding a client

When a new client with new consistency requirements is added to heterogeneous system 100, a consistency check of the client is performed for all master data before the data can be accessed by the new client.

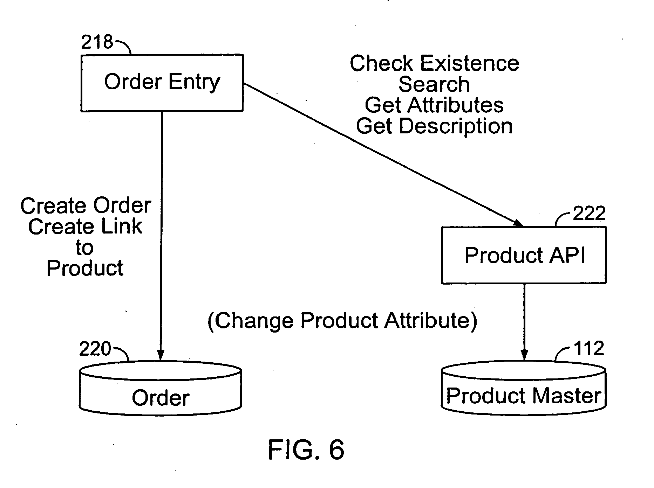

The new client registers with integration server 109 and publishes a check interface indicating which attributes need to be checked. The new client is placed on the exception list for all data so that new client cannot access the data until the consistency checks have been completed. A workflow similar to workflow 212 (FIG. 6) is initiated to perform consistency checks for the new client.

### Searches

When a client searches master data, the request is forwarded to master data server 110. Initially, master data server 110 returns a list of search results with a few important fields (e.g., a short description) to the client. If the client needs further information to any or all of the search results, the client uses a read operation (described below) to access more information. An application programming interface (API) of master data server 110 used for searching is designed to offer a large number of possibilities to cover the search options needed by the clients.

When a client requests to read data in master database 112, the request is routed to master data server 110. There are, for example, two types of read operations. One type of read operation, referred to as "get identification", is a request for identity information of an object, which returns the object identifier and certain descriptive parameters (e.g., a short text for a product, or a name for a business partner). Another type of read operation, referred to as "get detail", is a request for detailed information of an object, which returns all the information associated with the object.

Each client will have its own definition of which attributes of an object the client considers part of the object in a "get detail" read operation. Those attributes may be a subset of all the attributes known in master data server 110. It is possible that master data server 110 has a different, more general data model, so that the client API needs to be mapped to the master data server API. This mapping is performed in an application integration layer.

### Deletion

Deletion of data in master database 112 can be performed in two steps. First, each client is asked if any references to the object exist. If no reference exists, any read operation that attempts to read data associated with the object from that client is no longer accepted, and the object is not returned in any search results. Second, the object is archived and deleted from master database 112. The second step is executed when all clients have stated that there are no references to the object. It is possible for an object to be "deleted" with respect to certain clients (step two has passed) whereas other clients can still access and use the object.

Many processes allow navigation from the process transactions to the master data associated with the transactions. For example, when a sales order for a given product is produced, the user sees the product identifier and a description of the product. If the user wants to see more detail, he can navigate to an interface that shows master data associated with the product to see other attributes.

When clients are loosely coupled, such as the example shown in FIG 2, there are two situations. If the client has its own master data user interface, then that master data user interface should be used to display product master data. If the client does not have its own user interface, then a user interface of master data server 110 is used.

### Communication among applications

FIG. 6 shows interactions between an application and master data, e.g., product master data. A user uses a user interface 218 to produce an order 220 with respect to a product. He uses a search application to find a certain product by various attributes (e.g., external key, description, or product type). After the user enters data in the entry screen, the search application checks the existence of the product. The search application calls a product API 222 that access the product master database 112. If the search application finds the product, and a short text description of the product appears on the user interface. After the user finishes entering data for the order, he saves the data. When the data for the order is saved, a link (or reference) to the product master data is created. In some cases, product attributes are updated if necessary.

### Communication between software layers

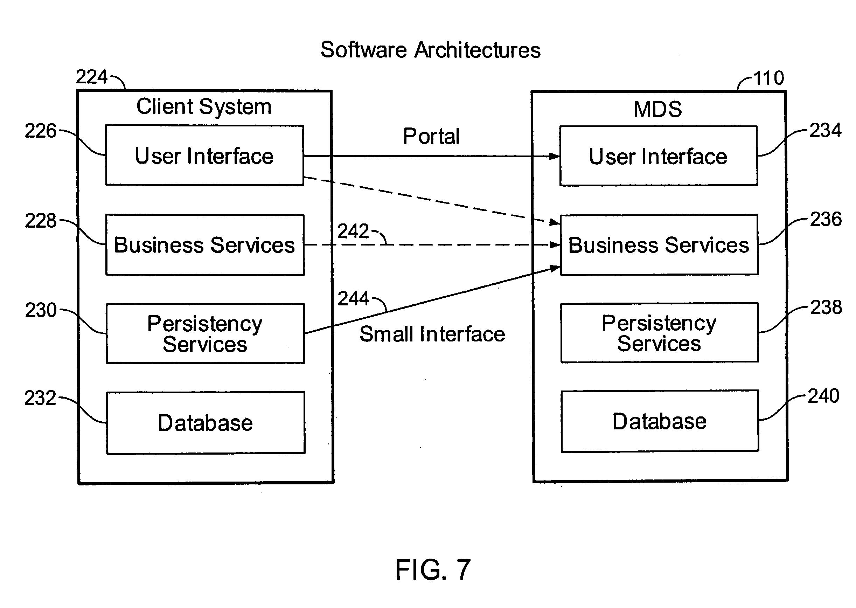

FIG. 7 shows communication between software layers of a client system 224 and a master data server 110. Client system 224 includes a user interface 226, a business services layer 228, a persistency services layer 230, and a master database 232. Likewise, master data server 110 includes a user interface 234, a business services layer 236, a persistency services layer 238, and a database 240. Client system 224 and master data server 110 have layered software architectures. Each layer accesses the functions of the layer directly underneath it within each system. When client system 224 needs to access data in database 240 of master data server 110, business service layer 228 of client 224 communicates with business services layer 238 of master data server 110 for access to master data.

Only master data server 110 has access to master data in master database 240. In one mode of operation, client system 224 keeps no master data, and uses its own persistency services 230 for client specific process data only. By using, for example, a portal, user interfaces 226 and 234 can be integrated, allowing a user to link or navigate from user interface 226 to user interface 234.

User interface 226 and business services layer 228 of client system 224 can access the business services layer 236 of master data server 110 directly, e.g., through an exchange interface or web services.

Persistency services layer 230 of client system 224 can use the business services layer 236 of master data server 110 to delegate the persistence of the master data.

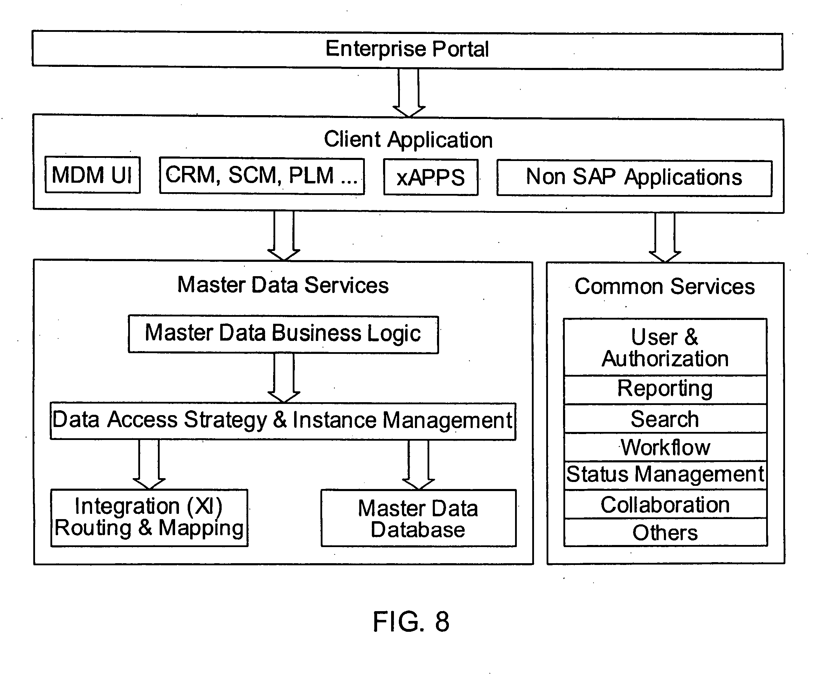

A user of client system 224 can decide to access master database 240 from business services layer 228 (through link 242) or persistency services layer 230 (through link 244) depending on architectural requirements. An advantage of connecting from persistency services layer 230 is that the number of services in persistency services layer 230 usually is lower than the number of services in business services layer 228. This results in less effort in adapting client system 224 so that it can access master database 240. Another advantage of connecting from persistency services layer 230 is that accessing master data server 110 from persistency services layer 230 allows business services layer 228 to be configured independently, regardless of where data is stored. This makes it easier to implement a hybrid architecture shown in FIG. 8.

### Hybrid data storage on client side

In one implementation of a heterogeneous information technology system, how a client accesses master data depends on how the client is configured. If the client is a stand-alone system, then the master data is stored directly in the client's database. If the client runs in a distributed environment having a master data server, the master data persistence of the master data server is used.

From the standpoint of developing software, it is advantageous to implement only one software "instance" of master data, which can then be used in different systems ― in distributed environments as well as in an integrated installation scenario. This reduces development and maintenance costs, and can offer the customer unified software.

A "hybrid software" for accessing master data can be developed by using the architecture shown in FIG. 8. Persistency services layer 230 is designed so that it can either access a local database 232 or a remote master database 240 through business services layer 236 of master data server 110. This makes it possible to decide at the point of customizing the software at the client site whether the data is maintained locally or remotely.

### Mapping of master data

Master data is exchanged between the client systems and the master data server using messages. The integration server is responsible for the routing and mapping of the messages. The integration server has information about the clients, and is able to select the appropriate mapping of the messages, data types, and interfaces.

An advantage of using the integration server is that no code has to be added on the client systems or on the master data server. The mapping rules are maintained and stored on the integration server. In one example, the mapping rules are developed by people who develop applications for the clients.

### Accessing master data from the client

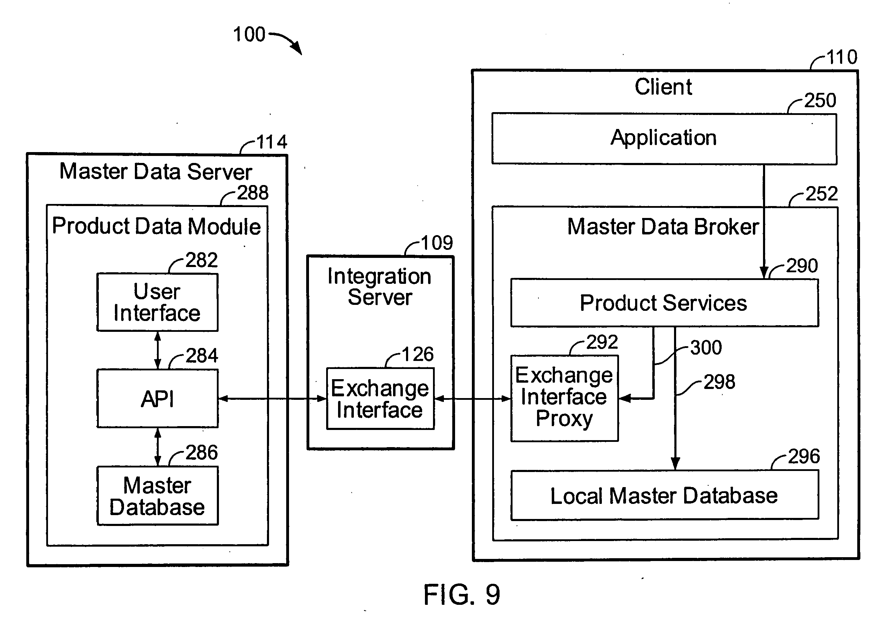

Referring to FIG. 9, master data server 114 includes a product data module 288 used to manage product data. Product data module 288 includes a user interface component 282, an application programming interface component 284, and a master database 286. A client application 250 accesses the product data module 288 by calling application programming interfaces of a master data broker 252, which performs the functions of caching, authority checking, and determines whether to access data stored locally (when client is configured as a stand-alone system) or to access data stored remotely (when client is configured to interact with a master data server). When client 110 interacts with a master data server, some data may also be cached locally (e.g., in the memory of client 110).

Master data broker 252 includes a product services component 290, an exchange interface proxy 292, and a local master database 296. Product services component 290 provides application programming interfaces that can be called by application 250. If client 110 is a stand-alone system, product services component 290 may access data stored in local master database 296 through path 298. If client 110 is configured to interact with master data server 114, product services component 290 may communicate with an exchange interface proxy 292 through path 300. Exchange interface proxy 292 communicates with application programming interfaces 284 of master data server 114 through the exchange interface 126 of integration server 109. Application programming interfaces 284 are used to access master data stored in master database 286. Whether client 110 is configured as a stand-alone system or as part of a networked system that interacts with master data server 114, master data is maintained in only one database ― either the local master database 290 or the master database 286.

### Links between data objects

Master data objects and process objects can be associated with a certain semantic. The implementation is done with patterns like a time dependent attributive n : m association, e.g., generic customer relationship management interlinkages.

Master data is stored on master data server 110. The decision whether links between master data objects should be stored on master data server 110 depends on usage of the link in the connected clients. If the semantic of a link is needed in many systems, the link has to be stored on the master data server 110.

In general, the master data server 110 does not know (or store) process data. Therefore, the client 114 is responsible for maintaining the link from its process data to the referenced master data.

Sometimes it may be necessary to keep a link to process data on the master data server 110. The implementation of such a link on the master data server 100 is generic.

### Caching data

Read access of master data occurs more often than the other master data processes and it is often a part of time-critical applications. By caching data on the client side, read access operations can be performed faster.

Different approaches may be used for implementing a cache on the client. Which approach is better will depend on the master data architecture. One approach is to cache the data in the integration server. In one approach, the integration server can cache the responses to read-message operations. If an identical message is sent again, the response can be delivered from the cache. In another approach, caching can be performed at a message level. The messages are cached by the master data application. In yet another approach, object models are cached. Often, the client master data transaction has a cache mechanism. This cache can also be used when communicating with the master data server.

To achieve an adequate caching result, the cached contents need to be shared between sessions of the client. Typically, this is achieved by making the cache persistent on the data base. Using the new basis technology of shared objects, the cache in memory can also be shared to improve performance.

When a persistent cache is used, the client should register the time of last access so that old entries can be deleted from the cache.

Cached data needs to be invalidated when the data is no longer useful. Because master data is seldom changed, a better approach is to use an explicit invalidation, rather than invalidating periodically. When master data is changed, this information is broadcast to all clients, so that they can invalidate their cache. The clients can also reread all invalidated entries at a convenient time, e.g., during the night. Caching mechanism can be offered at the server side. A shared cache between sessions would result in performance improvement.

### Authorization checks

A user plays an important role in authorization checks. A user is entitled to request certain objects or object types. One approach is to have all users from all clients exist on the master data server. User authorizations can be given on the master data server as usual. This approach tends to increases system administration. Another approach is to have all authorization checks done on the clients, and have the master data server return any data requested. This is easier from a user administration point of view, but makes implementing a consistent authorization concept more difficult.

The master data server uses a two-tier authorization architecture. In a first tier, the master data server assigns authorization levels to client systems. In a second tier, a client system may further assign authorization levels to users of the client or processes running on the client. For example, a sales client system can have the authorization to read general and sales data, as well as the authorization to change sales data. Another client system may have the authorization to read general data and sales data, without the authorization to change the sales data. A particular user of the sales client system may be authorized to read general data and only sales data related to a particular product. A user on a client cannot have a higher authorization level than what the client has when accessing master data.

The approach described above are used when data is accessed through the client. When the user navigates directly to the master data server, he needs to log on as a user on the master data server. Certain authorization levels will be granted to him based on his user status.

### Consequences of master data management

The following describes some of the consequences of using a master database to store data centrally.

A master data server is designed to meet the requirements of many clients. The master data software is designed to be flexible to allow the storage of attributes that are not known prior to configuration at the client site. A uniform approach in all master data using Easy Extension Workbench provided by SAP may be used.

A consistency check framework is provided so that clients can check the consistency of data.

Software is written in a hybrid fashion so that storage of master data can be performed either locally or remotely depending on how the systems are connected.

### Principles

Table 1 shows examples of principles for supporting dynamic access to a central master data server.

**Table 1**

| **Area** | **Principle** |
|---|---|
| Hybrid persistency | When developing master data software, a persistency layer should be used either on client side or on server side to allow data to be saved on a local database or to a remote master database depending on installation at the customer's side. |
| Caching | Caching mechanisms should be installed both on client level as well as on server level to enhance performance. |
| Update | Master data should not changed when process data is changed. Master data (e.g., an averaged material price) that may change depending on process data (e.g., material price) should be modeled as an extra service. |
| Authorization | Service should install authorization checks. Client users may be checked with their group property. |
| Transactions | If several services are involved in one business transaction, data consistency should be ensured when saving the data. |

Implementing a system where master data is stored centrally in a master database that is maintained by a master data server has some risks. The integration server and the master data server needs to have a high availability (fail-safety). If the master data server is not available, process based on master data can no longer run. To alleviate the damage caused by master data server failure, a local caching mechanism can be introduced on the clients. Errors in the master data may cause processes to stop. Therefore, mapping of master data has to be free of error. All objects should map correctly, and all required attributes should map correctly. Transactional consistency across systems may be difficult to achieve. The data should be modeled so that it does not need two-phase commits. Customization of applications at the clients needs to be harmonized. Master data models and implementations need to offer the flexibly to extend the master data in a way such that they can serve all clients with their special attributes.

Processes for dynamic access to master data can be implemented in digital electronic circuitry, or in computer hardware, firmware, software, or in combinations of them. Apparatus for dynamic access to master data can be implemented in a computer program product tangibly embodied in an information carrier, e.g., in a machine-readable storage device or in a propagated signal, for execution by a programmable processor. Method steps for dynamic access to master data can be performed by a programmable processor executing a program of instructions to perform functions of the invention by operating on input data and generating output. The processes for dynamic access to master data can be implemented advantageously in one or more computer programs that are executable on a programmable system including at least one programmable processor coupled to receive data and instructions from, and to transmit data and instructions to, a data storage system, at least one input device, and at least one output device. A computer program is a set of instructions that can be used, directly or indirectly, in a computer to perform a certain activity or bring about a certain result. A computer program can be written in any form of programming language, including compiled or interpreted languages, and it can be deployed in any form, including as a stand-alone program or as a module, component, subroutine, or other unit suitable for use in a computing environment.

Suitable processors for the execution of a program of instructions include, by way of example, both general and special purpose microprocessors, and the sole processor or one of multiple processors of any kind of computer. Generally, a processor will receive instructions and data from a read-only memory or a random access memory or both. The essential elements of a computer are a processor for executing instructions and one or more memories for storing instructions and data. Generally, a computer will also include, or be operatively coupled to communicate with, one or more mass storage devices for storing data files; such devices include magnetic disks, such as internal hard disks and removable disks; magneto-optical disks; and optical disks. Storage devices suitable for tangibly embodying computer program instructions and data include all forms of nonvolatile memory, including by way of example semiconductor memory devices, such as EPROM, EEPROM, and flash memory devices; magnetic disks such as internal hard disks and removable disks; magneto-optical disks; and CD-ROM and DVD-ROM disks. The processor and the memory can be supplemented by, or incorporated in, ASICs (application-specific integrated circuits).

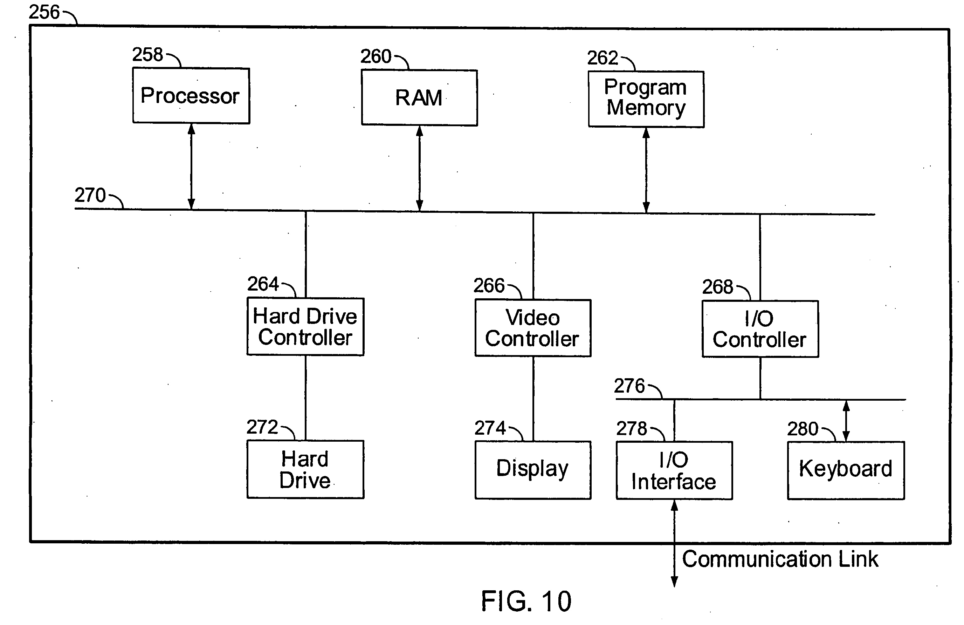

An example one such type of computer is shown in FIG. 10, which shows a block diagram of a programmable processing system (system) 256 suitable for implementing the processes for dynamic access of master data. The system 256 includes a processor 258, a random access memory (RAM) 260, a program memory 262 (for example, a writable read-only memory (ROM) such as a flash ROM), a hard drive controller 264, a video controller 266, and an input/output (I/O) controller 268 coupled by a processor (CPU) bus 270. The system 256 can be preprogrammed, in ROM, for example, or it can be programmed (and reprogrammed) by loading a program from another source (for example, from a floppy disk, a CD-ROM, or another computer).

The hard drive controller 264 is coupled to a hard disk 272 suitable for storing executable computer programs, including programs for implementing the master data software. The video controller 266 is coupled to a display 274 for displaying a graphical user interface. The I/O controller 268 is coupled by means of an I/O bus 276 to an I/O interface 278. The I/O interface 278 receives and transmits data in analog or digital form over communication links such as a serial link, local area network, wireless link, and parallel link.

Also coupled to the I/O bus 276 is a keyboard 280. Alternatively, separate connections (separate buses) can be used for the I/O interface 278 and keyboard 280. The processes for dynamic access of master data can be implemented in a computer system that includes a back-end component, such as a data server, or that includes a middleware component, such as an application server or an Internet server, or that includes a front-end component, such as a client computer having a graphical user interface or an Internet browser, or any combination of them. The components of the system can be connected by any form or medium of digital data communication, such as a communication network. Examples of communication networks include, e.g., a local area network ("LAN"), a wide area network ("WAN"), and the Internet.

The computer system can include clients and servers. A client and server are generally remote from each other and typically interact through a network, such as the described one. The relationship of client and server arises by virtue of computer programs running on the respective computers and having a client-server relationship to each other.

The invention has been described in terms of particular embodiments. Other embodiments are within the scope of the following claims. For example, the steps of the invention can be performed in a different order and still achieve desirable results.

A number of embodiments of the invention have been described. Nevertheless, it will be understood that various modifications may be made without departing from the spirit and scope of the invention. For example, integration server 109 and master data server 110 may physically reside in the same computer. The invention can be applied to any kind of data that is shared between two components, and is not limited to "master data." The data can be general data or application data. Accordingly, other embodiments are within the scope of the following claims.

## Claims

1. A method for maintaining data, comprising:
receiving at a server an identifier and data associated with an object that is identified by the identifier, the server configured to maintain a database that is accessible to clients;
for each client, verifying that the identifier and the data conforms to a set of rules defined by the client; and
entering the identifier and the data into the database.

2. The method of claim 1 wherein the data comprises attribute values associated with the object.

3. The method of claim 2 wherein verifying that the identifier and the data conforms to the set of rules comprises verifying that the data conforms with a subset of rules defined by the client relating to attributes of objects.

4. The method of claim 3 wherein the subset of rules comprises rules for defining acceptable formats of attribute values.

5. The method of claim 1 wherein verifying that the identifier and data conforms to a set of rules includes verifying that the identifier conforms with a subset of rules defined by the client relating to identification of objects.

6. The method of claim 5 wherein the set of rules comprises rules for defining acceptable formats of an identifier.

7. The method of claim 1, further comprising linking the data to the identifier.

8. The method of claim 7, further comprising sending a request from a client to the server requesting data linked to the identifier, and converting the data in the database linked to the identifier into a format acceptable by the client.

9. The method of claim 1, further comprising:
sending a request from the server to a second server, the request requesting verification of the identifier and the data,
identifying which clients can assess the database, and
routing the request from the second server to clients identified to be able to access the database.

10. The method of claim 1 wherein the server communicates with the clients using messages written in an extensible markup language.

11. The method of claim 1, further comprising for each client, sending a request to the client to request verification of whether the identifier and the data conforms to the.set of rules defined by the client, and if a particular client does not respond, placing the client on an exception list to indicate that the identifier and the data have not been verified to conform with the set of rules defined by the particular client.

12. The method of claim 11 wherein another attempt to verify whether the identifier and the data conforms to the set of rules defined by the particular client is conducted after a predefined period of time or when the particular client attempts to access data in the database.

13. A method for maintaining data, comprising:
sending a request from a client to a server to request modification of a set of data associated with an object, the set of data stored in a database maintained by the server;
receiving a message that the server has locked the set of data so that only the client can modify the set of data;
sending a set of modified data to the server for storing the modified data in the database;
receiving a message that the modified data was stored in the database, with the server determining what other clients may access the modified data for each of the other clients, verifying that the modified data conform with a set of rules defined by the client.

14. The method of claim 13 wherein the set of data comprises attribute values associated with the object.

15. The method of claim 14 wherein the set of rules defined by the client comprises rules for defining acceptable formats of attribute values.

16. The method of claim 14 wherein the server determines what other clients may access the modified data by comparing the attributes with checklists published by clients, each checklist indicating attributes that are accessible to a client.

17. The method of claim 1 or 13 wherein the object comprises a product and/or a business partner.

18. The method of claim 13 wherein the server communicates with the clients using messages that comprise code written in an extensible markup language.

19. A computer program product, tangibly stored on a machine-readable medium, for dynamic access of master data stored in a database that is accessible to clients, comprising instructions operable to cause a programmable processor to:
receive an identifier and data associated with an object that is identified by the identifier; for each client, verify that the identifier and the data conforms to a set of rules defined by the client; and
enter the identifier and the data into the database.

20. The computer program product of claim 19 wherein the data comprises attribute values associated with the object.

21. The computer program product of claim 20 wherein the instructions operable to cause the programmable processor to verify that the data conforms with a subset of rules defined by the client relating to attributes of objects.

22. The computer program product of claim 21 wherein the subset of rules comprises rules for defining acceptable formats of attribute values.

23. The computer program product of claim 19 wherein the instructions operable to cause the programmable processor to verify that the identifier conforms with a subset of rules defined by the client relating to identification of objects.

24. The computer program product of claim 23 wherein the set of rules comprises rules for defining acceptable formats of an identifier.

25. The computer program product of claim 19 wherein the instructions operable to cause the programmable processor to link the data to the identifier.

26. The computer program product of claim 25 wherein the instructions operable to cause the programmable processor to send a request from a client to the server requesting data linked to the identifier, and convert the data in the database linked to the identifier into a format acceptable by the client.

27. The computer program product of claim 19 wherein the server communicates with the clients using messages written in an extensible markup language.

28. The computer program product of claim 19 wherein the instructions operable to cause the programmable processor to, for each client, send a request to the client to request verification of whether the identifier and the data conforms to the set of rules defined by the client, and if a particular client does not respond, place the client on an exception list to indicate that the identifier and the data have not been verified to conform with the set of rules defined by the particular client.

29. The computer program product of claim 28 the instructions operable to cause the programmable processor to initiate another attempt to verify whether the identifier and the data conforms to the set of rules defined by the particular client after a predefined period of time or when the particular client attempts to access data in the database.

30. A computer program product, tangibly stored on a machine-readable medium, for dynamic access of master data, comprising instructions operable to cause a computer system having clients and a server to:
send a request from a first client to the server for modification of a set of data associated with an object, the set of data stored in a database maintained by the server;
receive a message that the server has locked the set of data so that only the client can modify the set of data;
send a modified set of data to the server for storing the data in the database; and
receive a message that the set of modified data was stored in the database, where the server determines what other clients may access the set of modified data for each of the other clients, and verifies that the set of modified data conform with a set of rules defined by the client.

31. The computer program product of claim 30 wherein the set of data comprises attribute values associated with the object.

32. The computer program product of claim 31 wherein the set of rules defined by the client comprises rules for defining acceptable formats of attribute values.

33. The computer program product of claim 31 wherein the instructions operable to cause the computer system to compare the attribute values with checklists published by clients, each checklist indicating attributes that are accessible to a client.

34. The computer program product of claim 19 or 30 wherein the object comprises a product and/or a business partner.

35. The computer program product of claim 30 wherein the instructions operable to cause the server to communicate with the clients using messages that comprise code written in an extensible markup language.
